# EUROPEAN PATENT APPLICATION

(11) **EP 2 829 466 A1**
(43) Date of publication of application: **28.01.2015**
(21) Application number: 14171876.7
(22) Date of filing: 11.06.2014
(51) Int. Cl.: B62M 6/45

(54) **Motor control system of electric bike and method for controlling the same**

(30) Priority: 26.07.2013 KR 20130088808
(71) Applicant: Samsung Electro-Mechanics Co., Ltd., Suwon-si, Gyeonggi-do 443-743 (KR)
(72) Inventor: Kim, Se Joo, 443-743 Suwon-Si (KR); Joung, Ho Son, 443-734 Suwon-Si (KR); Ha, Keun Soo, 443-743 Suwon-Si (KR); Kim, Gyoung Tai, 443-743 Suwon-Si (KR)
(74) Representative: Heine, Christian Klaus

(57) **Abstract**

Disclosed herein is a motor control system of an electric bike, including: a driving speed detection unit (D) detecting a driving speed; a wheel speed detection unit (170) detecting a rotational speed of a wheel; and a motor driving control unit (120) controlling a driving of a motor, in which the motor driving control unit (120) receives values detected by the driving speed detection unit (D) and the wheel speed detection unit (170) to estimate a chain gear ratio so as to control a driving of the motor.

## Description

### CROSS REFERENCE TO RELATED APPLICATION

This application claims the benefit of Korean Patent Application No. 10-2013-0088808, filed on July 26, 2013, entitled "Motor Control System Of Electric Bike And Method For Controlling The Same", which is hereby incorporated by reference in its entirety into this application.

### BACKGROUND OF THE INVENTION

### 1. Technical Field

The present invention relates to a motor control system of an electric bike and a method for controlling the same.

### 2. Description of the Related Art

A bike has wheels which are disposed at a front and rear of a frame in a straight line. In this case, the wheel is configured of a front wheel which is a steering wheel disposed at the front of the frame and a rear wheel which is a driving wheel disposed at the rear thereof. Further, the bike is configured to go forward by making a passenger press a pedal interconnected to the rear wheel so as to rotate the rear wheel. The bike includes a power transmission apparatus, such as a chain and a gear which transmit power generated from the pedal to the rear wheel.

In particular, the power transmission apparatus of the chain type is configured to include a driving sprocket which is mounted at one side of the pedal, a driven sprocket which has a diameter smaller than that of the driving sprocket and is mounted at the rear wheel which is the driving wheel, and a chain which connects the driving sprocket to the driven sprocket.

Therefore, when the passenger depresses the pedal by the above configuration, the driving sprocket integrally mounted with the pedal rotates and at the same time the rear wheel connected to the driven sprocket also rotates by the chain, such that the bike goes forward.

Since the bike is driven by a pedal effort generated when the user is pedaling, the bike does not have much difficulty in traveling at a flat road, but when the bike drives up a slope, such as a hill, much effort is required.

To solve the problem, an electric bike mounted with a motor so as to be driven using a driving force of the motor in addition to the pedal effort of the user has been developed recently.

That is, the electric bike uses the motor driven with a battery and is configured to be driven with only the pedal effort of the user, only the force of the motor driven with the battery, or both of the pedal effort and the force of the motor.

When the electric bike according to the related art drives up a hill, the electric bike uses a torque sensor mounted at a shaft of the pedal to automatically control the driving force of the motor depending on a signal output from the torque sensor.

As a type of the torque sensor, there are a magnetic type in which an inductor senses a magnetic field generated depending on the amount of twisting of a twist sensor coil to generate a voltage and a strain gauge type in which a twist sensor mounted between a pedal and a crank measures the magnetic field.

However, the torque sensor is very expensive. The torque essentially senses the twisting of the shaft. In this case, the twisted amount is very insignificant and therefore needs to be precisely amplified.

Further, since the shaft rotates but a controller receiving information does not rotate, many technologies to transmit information are required and the torque sensor is very expensive and thus the electric bike becomes correspondingly expensive.

Further, since the bike is mounted with the torque sensor, a large mounting space may be required and since a large number of mounting components are required, mounting and maintenance may be difficult.

Further, a weight of the bike is increased due to a weight of the torque sensor and when the bike drives up the inclined surface, an assist ratio of the motor is increased and thus the required number of batteries may be increased.

### [Prior Art Document]

### [Patent Document]

(Patent Document 1) Korean Patent Laid-Open Publication No. 2012-0132593

### SUMMARY OF THE INVENTION

The present invention has been made in an effort to provide a motor control system of an electric bike and a method for controlling the same which detect a pedal speed of a bike, a speed of a chain, a speed of a motor, and a rotational speed of a wheel to estimate a chain gear ratio, thereby controlling a driving of the motor.

Further, the present invention has been made in an effort to provide a motor control system of an electric bike with good riding comfort and a method for controlling the same.

According to a preferred embodiment of the present invention, there is provided a motor control system of an electric bike, including: a driving speed detection unit detecting a driving speed; a wheel speed detection unit detecting a rotational speed of a wheel; and a motor driving control unit controlling a driving of a motor, wherein the motor driving control unit receives values detected by the driving speed detection unit and the wheel speed detection unit to estimate a chain gear ratio so as to control a driving of the motor.

The driving speed detection unit may include a motor speed detector which detects the rotational speed of the motor.

The driving speed detection unit may include a chain speed detector which detects a moving speed of a chain.

The chain speed detector may include a chain speed sensor sensing a rotation of a driving sprocket which is fastened with the chain to transmit a driving force to the chain.

The driving speed detection unit may include a pedal speed detector which detects a rotational speed of a pedal.

The pedal speed detector may include a pedal speed sensor which senses revolutions per minute of a pedal rotating shaft.

The motor control system of an electric bike may further include: a memory unit in which a motor assist setting value depending on the chain gear ratio is stored, in which the motor driving control unit compares an estimated value of a chain gear ratio with the set value of the memory unit to control the driving of the motor.

The wheel speed detection unit may include: a magnet mounted at the wheel; and a hall sensor mounted at a frame to sense a magnetic field of the magnet.

The magnet may be mounted at a spoke of a rear wheel.

The magnet and the hall sensor may be mounted to correspond to each other.

According to a preferred embodiment of the present invention, there is provided a motor control method of an electric bike, including: detecting, by a driving speed detection unit, a driving speed and detecting, by a wheel speed detection unit, a rotational speed of a wheel; and controlling a driving of a motor by estimating a chain gear ratio using a motor driving control unit which receives values detected by the driving speed detection unit and the wheel speed detection unit.

The driving speed detection unit may include a motor speed detector which detects the rotational speed of the motor.

The driving speed detection unit may include a chain speed detector which detects a moving speed of a chain.

The chain speed detector may detect a chain speed using a chain speed sensor which senses a rotation of a driving sprocket which is fastened with the chain to transmit a driving force to the chain.

The driving speed detection unit may include a pedal speed detector which detects a rotational speed of a pedal.

The pedal speed detector may sense revolutions per minute of a pedal rotating shaft using a pedal speed sensor.

In the controlling, the motor driving control unit may compare an estimated value of a chain gear ratio with a motor assist setting value stored in a memory unit to control the driving of the motor.

The wheel speed detection unit may detect a rotational speed of a wheel using a hall sensor mounted at a frame which senses a magnetic field generated from a magnet mounted at a wheel.

The magnet may be mounted at a spoke of a rear wheel.

The magnet and the hall sensor may be mounted to correspond to each other.

### BRIEF DESCRIPTION OF THE DRAWINGS

The above and other objects, features and advantages of the present invention will be more clearly understood from the following detailed description taken in conjunction with the accompanying drawings, in which:
FIG. 1 is an exemplified diagram illustrating an electric bike in which a motor control system of the electric bike according to a preferred embodiment of the present invention is used;
FIGS. 2 and 3 are exemplified diagrams illustrating a driving unit and a power transmission unit of the electric bike in which the motor control system of the electric bike according to the preferred embodiment of the present invention is used; and
FIG. 4 is a configuration diagram illustrating the motor control system of the electric bike according to the preferred embodiment of the present invention.

### DESCRIPTION OF THE PREFERRED EMBODIMENTS

The objects, features and advantages of the present invention will be more clearly understood from the following detailed description of the preferred embodiments taken in conjunction with the accompanying drawings. Throughout the accompanying drawings, the same reference numerals are used to designate the same or similar components, and redundant descriptions thereof are omitted. Further, in the following description, the terms "first", "second", "one side", "the other side" and the like are used to differentiate a certain component from other components, but the configuration of such components should not be construed to be limited by the terms. Further, in the description of the present invention, when it is determined that the detailed description of the related art would obscure the gist of the present invention, the description thereof will be omitted.

Hereinafter, preferred embodiments of the present invention will be described in detail with reference to the attached drawings.

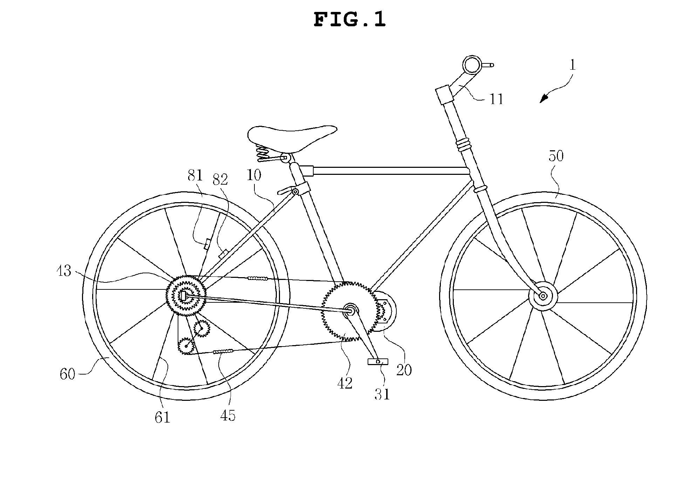

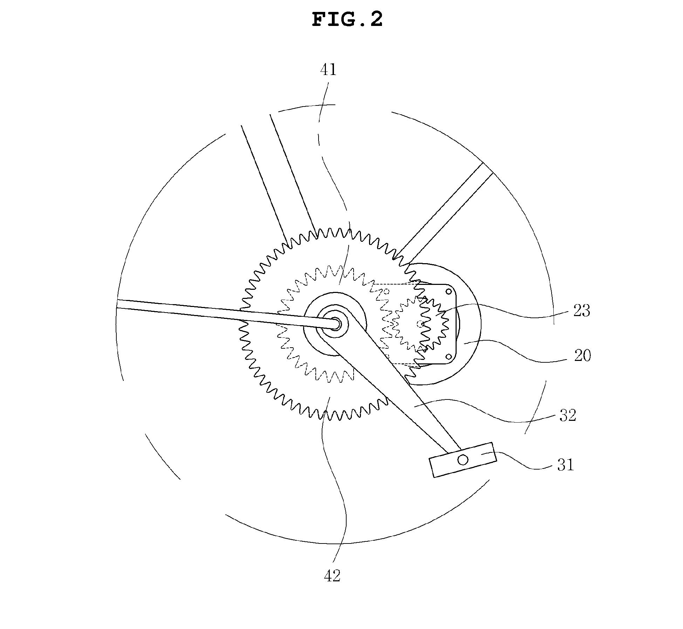

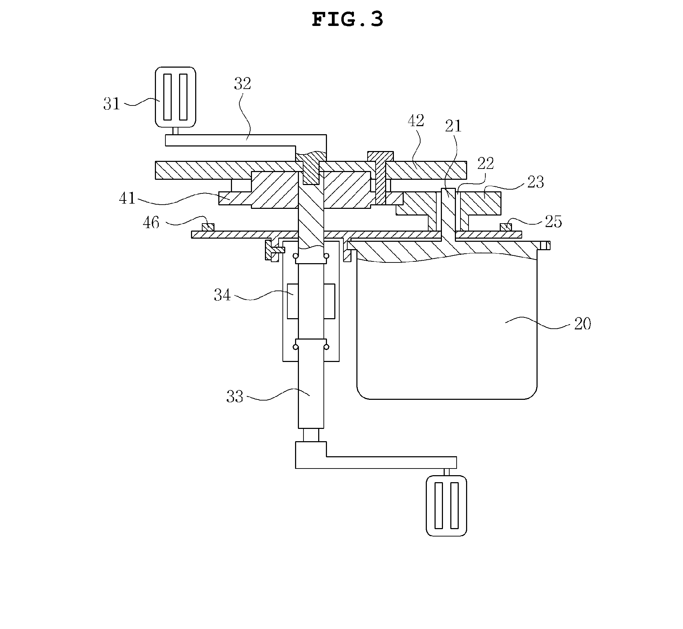

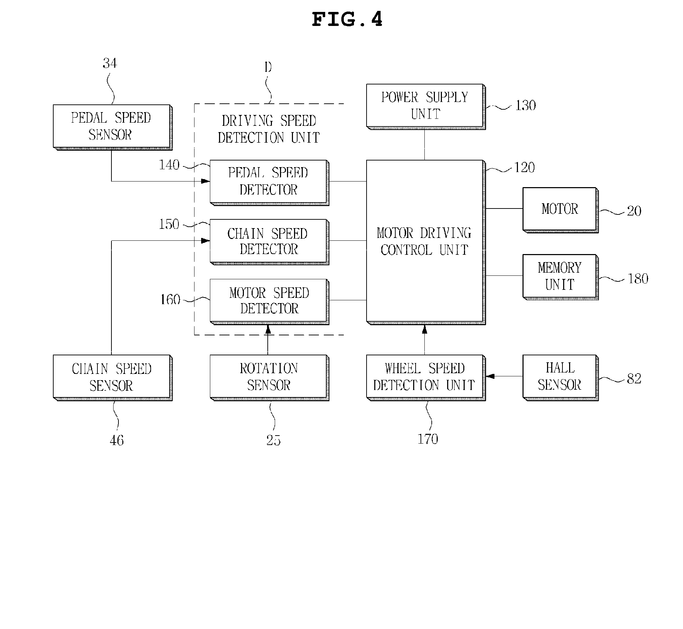

FIG. 1 is an exemplified diagram illustrating an electric bike in which a motor control system of the electric bike according to a preferred embodiment of the present invention is used, FIGS. 2 and 3 are exemplified diagrams illustrating a pedal gear unit 41 and a power transmission unit of an electric bike in which the motor control system of the electric bike according to the preferred embodiment of the present invention is used, and FIG. 4 is a configuration diagram illustrating the motor control system of the electric bike according to the preferred embodiment of the present invention.

Referring to FIG. 4, the motor control system of the electric bike according to the preferred embodiment of the present invention includes a driving speed detection unit D, a wheel speed detection unit 170, and a motor driving control unit 120 to control a motor 20.

First, referring to FIGS. 1 to 4, an electric bike 1 using a motor control device according to the preferred embodiment of the present invention includes a frame 10, wheels 50 and 60 rotatably mounted at the frame 10, and a handle 11 which is mounted at a front end of the frame 10. In this configuration, the wheels 50 and 60 may include a front wheel 50 which is mounted at a front of the frame 10 and a rear wheel 60 which is disposed at a rear of the frame 10.

Further, the electric bike 1 may include a pedal rotating shaft 33 which is rotatably mounted at a lower portion of a center of the frame 10, a crank 32 which radially extends to face each other at both ends of the pedal rotating shaft 33, and a pedal 31 which is rotatably mounted at a tip of the crank 32.

Further, the electric bike 1 may include a driving unit which is mounted at one portion of the frame 10 to generate a pedal gear force and a power transmission unit which is connected to the pedal rotating shaft 33 to transmit a pedal effort generated by rolling the pedal 31 and power of the driving unit to the front wheel 50.

In this configuration, the driving unit may include a motor 20, a motor rotating shaft 21, a motor driving gear 23 which is mounted at the motor rotating shaft 21, and a power supply unit 130 which is mounted at the frame 10. In this configuration, the driving unit further includes a motor one-way clutch 22 which is mounted at the motor rotating shaft 21 and the motor driving gear 23 may be mounted at the motor one-way clutch 22.

Further, the power transmission unit may include a pedal gear 41, a driving sprocket 42, a driven sprocket 43, and a chain 45 which connects the driving sprocket 42 to the driven sprocket 43. In this case, the driving sprocket 42 and the driven sprocket 43 each have different sizes and are provided in plural and may be connected to each other by the chain 45. In this case, whenever the chain 45 selectively connects between the plurality of driving sprockets 42 and driven sprockets 43 which have different sizes, a chain gear ratio may be selectively determined.

In the electric bike 1 using the motor control apparatus according to the preferred embodiment of the present invention which is configured as described above, the pedal 31 rotates by being applied with the user force and the generated rotating force is transmitted to the chain 45 through the pedal gear 41 and the driving sprocket 42. Further, when the motor 20 is connected to the power supply unit 150 to be applied with power, the motor rotating shaft 21 may rotate to transmit the rotating force to the chain 45 through the motor driving gear 23 and the driving sprocket 42. In this case, when the user force is applied to the pedal 31 to drive the electric bike 1, the bike easily drives up a hill, and the like due to the assist of the motor 20 even when the user applies a small force to the pedal 31.

In this case, the assist ratio of the motor 20 may be controlled by allowing the motor driving control unit 120 to estimate the chain gear ratio which is detected by the driving speed detection unit D and the wheel speed detection unit 170.

First, the driving speed detection unit D detects a driving speed at which the wheels 50 and 60 are driven. Here, the driving speed detection unit D may include a motor speed detector 160, a chain speed detector 150, and a pedal speed detector 140.

The motor speed detector 160 detects the rotational speed of the motor 20. In this case, the motor speed detector 160 may include a rotation sensor 25 which senses the rotational speed of the motor rotating shaft 21 or the motor driving gear 23. Therefore, the motor speed detector 160 uses the rotation sensor 25 to detect the motor speed and transmits the detected value to the motor driving control unit 120.

The chain speed detector 150 detects a moving speed of the chain 45. In this case, the chain speed detector 150 may include a chain speed sensor 46 sensing the rotation of the driving sprocket 42 which is fastened with the chain 45 to transmit the driving force to the chain 45. Therefore, the chain speed detector 150 uses the chain speed sensor 46 to detect the chain speed and transmits the detected value to the motor driving control unit 120.

The pedal speed detector 140 detects the rotational speed of the pedal 31. In this case, the pedal speed detector 140 may include a pedal speed sensor 34 which senses revolutions per minute of the pedal rotating shaft 32. Therefore, the pedal speed detector 140 uses the pedal speed sensor 34 to detect the pedal speed and transmits the detected value to the motor driving control unit 120.

The wheel speed detection unit 170 detects the rotational speed of the wheel 60. Further, the wheel speed detection unit 170 may include a magnet 81 which is mounted at the wheel 60 and a hall sensor 82 which is mounted at the frame 10 to sense a magnetic field generated from the magnet 81. Here, the magnet 81 and the hall sensor 82 may be mounted to correspond to each other. In this case, the magnet 81 may be mounted at a spoke 61 of the rear wheel 60 among the wheels 50 and 60. Therefore, the magnet 81 rotates simultaneously with the rotation of the rear wheel 60 and the hall sensor 82 senses the magnetic field when the hall sensor 82 may be adjacent to the rotating magnet 81 to sense the rotational speed of the wheel 60. Further, the wheel speed detection unit 170 transmits the detected wheel speed value to the motor driving control unit 120.

The motor driving control unit 120 receives the detected value which is transmitted from the motor speed detector 160, the chain speed detector 150, or the pedal speed detector 140 which is the driving speed detection unit D and the detected value which is transmitted from the wheel speed detection unit 170 to estimate the chain gear ratio, thereby controlling the driving of the motor 20. In this case, the motor driving control unit 120 may control an on/off of electricity application from the power supply unit 130 to the motor 20 to control the driving of the motor 20. Here, the power supply unit 130 may be, for example, a battery.

Further, the motor driving control unit 120 may compare the estimated chain gear ratio value with the assist setting value of the motor 20 stored in a memory unit 180 to control the driving of the motor 20. Here, the memory unit 180 may be included in the motor driving control unit 120, but the preferred embodiment of the present invention is not necessarily limited thereto, and for example, the memory unit 180 is separately provided from the motor driving control unit 120 to be electrically connected to the motor driving control unit 120.

In the motor control system of the electric bike according to the preferred embodiment of the present invention which is configured as described above, the motor driving control unit 120 uses the detected value which is transmitted from the motor speed detector 160, the chain speed detector 150, or the pedal speed detector 140 and the detected value which is transmitted from the wheel speed detection unit 170 to estimate the chain gear ratio value of the pedal 31 so as to control the driving of the motor 20, thereby controlling the assist ratio of the motor 20.

A motor control method of an electric bike according to a preferred embodiment of the present invention includes detecting the driving speed and the wheel speed and controlling the driving of the motor 20. Herein, the motor control method of an electric bike according to the preferred embodiment of the present invention relates to a method for controlling a motor system of an electric bike according to the preferred embodiment of the present invention and therefore the overlapping description thereof will be omitted if possible.

Hereinafter, the motor control method of an electric bike according to the preferred embodiment of the present invention will be described in more detail.

Referring to FIGS. 1 to 4, in the detecting, the driving speed detection unit D detects the driving speed of the electric bike 1 and the wheel speed detection unit 170 detects the rotational speed of the wheel.

The driving speed detection unit D detects the driving speed of the electric bike 1 to transmit the detected value to the motor driving control unit 120.

Here, the driving speed detection unit D may include the motor speed detector 160, the chain speed detector 150, and the pedal speed detector 140.

The motor speed detector 160 detects the rotational speed of the motor 20. In this case, the motor speed detector 160 uses the rotation sensor 25 to sense the rotational speed of the motor rotating shaft 21 or the motor driving gear 23, thereby detecting the rotational speed of the motor rotating shaft 21. In this case, the motor speed detector 160 transmits the detected rotational speed value of the motor 20 to the motor driving control unit 120.

The chain speed detector 150 detects the moving speed of the chain 45. In this case, the chain speed detector 150 may use the chain speed sensor 46 to sense the rotation of the driving sprocket 42 which is fastened with the chain 45 to transmit the driving force to the chain 45. Therefore, the chain speed detector 150 uses the chain speed sensor 46 to detect the chain speed and transmits the detected value to the motor driving control unit 120.

The pedal speed detector 140 detects the rotational speed of the pedal 31. In this case, the pedal speed detector 140 may use the pedal speed sensor 34 to sense the revolutions per minute of the pedal rotating shaft 32. Therefore, the pedal speed detector 140 transmits the rotational speed value of the pedal 31 detected by the pedal speed sensor 34 to the motor driving control unit 120.

The wheel speed detection unit 170 detects the rotational speed of the wheel 60. Further, the wheel speed detection unit 170 uses the hall sensor 82 mounted at the frame 10 to sense the magnetic field generated from the magnet 81 mounted at the wheel 60, thereby detecting the rotational speed of the wheel 60. Here, the magnet 81 and the hall sensor 82 may be mounted to correspond to each other. In this case, the magnet 81 may be mounted at the spoke 61 of the rear wheel 60 among the wheels. Therefore, the magnet 81 rotates simultaneously with the rotation of the rear wheel 60 and the hall sensor 82 may sense the magnetic field when the hall sensor 82 may be adjacent to the rotating magnet 81 to sense the rotational speed of the wheel 60. Further, the wheel speed detection unit 170 transmits the detected wheel speed value to the motor driving control unit 120.

The motor driving control unit 120 receives the detected value which is transmitted from the motor speed detector 160, the chain speed detector 150, or the pedal speed detector 140 which is the driving speed detection unit D and the detected value which is transmitted from the wheel speed detection unit 170 to estimate the chain gear ratio, thereby controlling the driving of the motor 20. In this case, the motor driving control unit 120 may control the on/off of electricity application from the power supply unit 130 to the motor 20 to control the driving of the motor 20. Here, the power supply unit 130 may be, for example, a battery.

Further, the motor driving control unit 120 may compare the estimated chain gear ratio value with the assist setting value of the motor 20 stored in the memory unit 180 to control the driving of the motor 20. Here, the memory unit 180 may be included in the motor driving control unit 120, but the preferred embodiment of the present invention is not necessarily limited thereto, and for example, the memory unit 180 is separately provided from the motor driving control unit 120 to be electrically connected to the motor driving control unit 120.

In the motor control method of the electric bike according to the preferred embodiment of the present invention which is configured as described above, the motor driving control unit 120 uses the detected value which is transmitted from the motor speed detector 160, the chain speed detector 150, or the pedal speed detector 140 and the detected value which is transmitted from the wheel speed detection unit 170 to estimate the chain gear ratio value of the pedal 31 so as to control the driving of the motor 20, thereby controlling the assist ratio of the motor 20.

According to the preferred embodiments of the present invention, the chain gear ratio is estimated by detecting the pedal speed of the bike, the speed of the chain, the speed of the motor, and the rotational speed of the wheel to control the driving of the motor, thereby controlling the assist ratio of the motor without the expensive torque sensor.

Therefore, it is possible to largely reduce cost and reduce the space occupied by the torque sensor. Further, the weight of the electric bike may be reduced and the use of electricity required to drive the motor may be reduced, such that the use time of the battery driving the motor may be increased.

In addition, according to the preferred embodiments of the present invention, the driving of the motor is controlled by calculating the chain gear ratio, thereby providing the good riding comfort.

Although the embodiments of the present invention have been disclosed for illustrative purposes, it will be appreciated that the present invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

## Claims

1. A motor control system of an electric bike, comprising:
a driving speed detection unit detecting a driving speed;
a wheel speed detection unit detecting a rotational speed of a wheel; and
a motor driving control unit controlling a driving of a motor,
wherein the motor driving control unit receives values detected by the driving speed detection unit and the wheel speed detection unit to estimate a chain gear ratio so as to control a driving of the motor.

2. The motor control system as set forth in claim 1, wherein the driving speed detection unit includes a motor speed detector which detects the rotational speed of the motor.

3. The motor control system as set forth in claim 1, wherein the driving speed detection unit includes a chain speed detector which detects a moving speed of a chain.

4. The motor control system as set forth in claim 3, wherein the chain speed detector includes a chain speed sensor sensing a rotation of a driving sprocket which is fastened with the chain to transmit a driving force to the chain.

5. The motor control system as set forth in claim 1, wherein the driving speed detection unit includes a pedal speed detector which detects a rotational speed of a pedal.

6. The motor control system as set forth in claim 5, wherein the pedal speed detector includes a pedal speed sensor which senses revolutions per minute of a pedal rotating shaft.

7. The motor control system as set forth in claim 1, further comprising:
a memory unit in which a motor assist setting value depending on the chain gear ratio is stored,
wherein the motor driving control unit compares an estimated value of a chain gear ratio with the set value of the memory unit to control the driving of the motor.

8. The motor control system as set forth in claim 1, wherein the wheel speed detection unit includes:
a magnet mounted at the wheel; and
a hall sensor mounted at a frame to sense a magnetic field of the magnet.

9. The motor control system as set forth in claim 8, wherein the magnet is mounted at a spoke of a rear wheel.

10. The motor control system as set forth in claim 8, wherein the magnet and the hall sensor are mounted to correspond to each other.

11. A motor control method of an electric bike, comprising:
detecting, by a driving speed detection unit, a driving speed and detecting, by a wheel speed detection unit, a rotational speed of a wheel; and
controlling a driving of a motor by estimating a chain gear ratio using a motor driving control unit which receives values detected by the driving speed detection unit and the wheel speed detection unit.

12. The motor control method as set forth in claim 11, wherein the driving speed detection unit includes a motor speed detector which detects the rotational speed of the motor.

13. The motor control method as set forth in claim 11, wherein the driving speed detection unit includes a chain speed detector which detects a moving speed of a chain.

14. The motor control method as set forth in claim 13, wherein the chain speed detector detects a chain speed using a chain speed sensor which senses a rotation of a driving sprocket which is fastened with the chain to transmit a driving force to the chain.

15. The motor control method as set forth in claim 11, wherein the driving speed detection unit includes a pedal speed detector which detects a rotational speed of a pedal.

16. The motor control method as set forth in claim 15, wherein the pedal speed detector detects a pedal speed using a pedal speed sensor which senses revolutions per minute of a pedal rotating shaft.

17. The motor control method as set forth in claim 11, wherein in the controlling, the motor driving control unit compares an estimated value of a chain gear ratio with a motor assist setting value stored in a memory unit to control the driving of the motor.

18. The motor control method as set forth in claim 11, wherein the wheel speed detection unit detects a rotational speed of a wheel using a hall sensor mounted at a frame which senses a magnetic field generated from a magnet mounted at a wheel.

19. The motor control method as set forth in claim 18, wherein the magnet is mounted at a spoke of a rear wheel.

20. The motor control method as set forth in claim 18, wherein the magnet and the hall sensor are mounted to correspond to each other.
